# EUROPEAN PATENT APPLICATION

(11) **EP 4 410 936 A1**
(43) Date of publication of application: **07.08.2024**
(21) Application number: 22876276.1
(22) Date of filing: 27.09.2022
(51) Int. Cl.: C10N 40/30, F04B 39/00, C10M 101/02, C10M 105/06, C10M 107/20, C10M 107/24, C10M 107/34, F25B 1/00, C09K 5/04, F04C 29/00

(54) **COMPRESSOR, REFRIGERATION DEVICE, AND REFRIGERATOR OIL**

(30) Priority: 30.09.2021 JP 2021161799
(71) Applicant: Daikin Industries, Ltd., Osaka-shi, Osaka 530-0001 (JP)
(72) Inventor: TERAI Haruka, Osaka-shi, Osaka 530-0001 (JP); MATSUURA, Hideki, Osaka-shi, Osaka 530-0001 (JP); TANAKA, Masaru, Osaka-shi, Osaka 530-0001 (JP); KAWAE, Arisa, Osaka-shi, Osaka 530-0001 (JP)
(74) Representative: Conti, Marco
(86) International application number: PCT/JP2022/036037
(87) International publication number: WO 2023/054410

(57) **Abstract**

Provided is a compressor in which degradation of an insulating member due to hydrolysis is sufficiently suppressed and degradation of reliability is suppressed. A compressor (11) includes a casing (50), a compression mechanism (20), and an insulating film (86c). The casing (50) stores a refrigerating machine oil. The compression mechanism (20) is housed within the casing (50) and compresses a refrigerant. The insulating film (86c) is housed within the casing (50) and is formed of a polymer having an ester bond. The refrigerant includes a hydrocarbon as a main component. The refrigerant has a saturated water content of less than 0.3% by weight. The refrigerating machine oil has a saturated water content of 1.8% by weight or more.

## Description

### TECHNICAL FIELD

The present disclosure relates to a compressor, a refrigeration apparatus, and a refrigerating machine oil.

### BACKGROUND ART

Patent Literature 1 (International Publication No. 2009/072314) describes a compressor using R290 (propane) as a refrigerant.

### SUMMARY OF THE INVENTION

### <Technical Problem>

Hydrocarbon-type refrigerants such as R290 have lower saturated water contents than HFC-type refrigerants such as R410A. For this reason, compressors using hydrocarbon-type refrigerants undergo degradations of insulating members within the compressors due to water within the compressors, which may result in occurrence of short circuits within the compressors.

### <Solution to Problem>

A compressor according to a first embodiment includes a casing, a compression mechanism, and an insulating member. The casing stores a refrigerating machine oil. The compression mechanism is housed within the casing and compresses a refrigerant. The insulating member is housed within the casing and is formed of a polymer having an ester bond. The refrigerant includes a hydrocarbon as a main component. The refrigerant has a saturated water content of less than 0.3% by weight. The refrigerating machine oil has a saturated water content of 1.8% by weight or more.

In this compressor, in spite of such a low saturated water content of the refrigerant, the refrigerating machine oil has such a high saturated water content that degradation of the insulating member due to hydrolysis is sufficiently suppressed, so that degradation of the reliability of the compressor is suppressed.

A compressor according to a second embodiment is the compressor according to the first embodiment, wherein the refrigerating machine oil is selected from the group consisting of a polyalkylene glycol, an oil mixture of a polyalkylene glycol and a polyol ester, an oil mixture of a polyalkylene glycol and a polyvinyl ether, an oil mixture of a polyalkylene glycol and an alkylbenzene, and an oil mixture of a polyalkylene glycol and a mineral oil.

In this compressor, in spite of such a low saturated water content of the refrigerant, the refrigerating machine oil has such a high saturated water content that degradation of the insulating member due to hydrolysis is sufficiently suppressed, so that degradation of the reliability of the compressor is suppressed.

A compressor according to a third embodiment is the compressor according to the first embodiment or the second embodiment, wherein the refrigerant is propane or isobutane.

In this compressor, in spite of such a low saturated water content of the refrigerant, the refrigerating machine oil has such a high saturated water content that degradation of the insulating member due to hydrolysis is sufficiently suppressed, so that degradation of the reliability of the compressor is suppressed.

A compressor according to a fourth embodiment is the compressor according to any one of the first to the third embodiments, wherein the polymer is selected from the group consisting of polyethylene terephthalate, polybutylene terephthalate, and polyethylene naphthalate.

This compressor includes the insulating member formed of the polymer that is less likely to be degraded by hydrolysis, so that degradation of the reliability of the compressor is suppressed.

A compressor according to a fifth embodiment is the compressor according to any one of the first to the fourth embodiments, further including a motor. The motor is coupled to the compression mechanism and drives the compression mechanism. The insulating member is an insulating film attached to the motor to suppress occurrence of an interphase short circuit of the motor.

In this compressor, the insulating film is less likely to be degraded by hydrolysis, so that occurrence of a short circuit of the compressor is suppressed and hence degradation of the reliability of the compressor is suppressed.

A refrigeration apparatus according to a sixth embodiment includes the compressor according to any one of the first to the fifth embodiments.

In this refrigeration apparatus, degradation of the insulating member of the compressor due to hydrolysis is sufficiently suppressed, so that degradation of the reliability of the refrigeration apparatus is suppressed.

A refrigerating machine oil according to a seventh embodiment is a refrigerating machine oil used for a compressor including a compression mechanism that compresses a refrigerant including a hydrocarbon as a main component, and an insulating member formed of a polymer having an ester bond. The refrigerating machine oil is selected from the group consisting of a polyalkylene glycol, an oil mixture of a polyalkylene glycol and a polyol ester, an oil mixture of a polyalkylene glycol and a polyvinyl ether, an oil mixture of a polyalkylene glycol and an alkylbenzene, and an oil mixture of a polyalkylene glycol and a mineral oil. The refrigerating machine oil has a saturated water content of 1.8% by weight or more.

Even when this refrigerating machine oil is used for a compressor that compresses a refrigerant having a low saturated water content, the refrigerating machine oil has such a high saturated water content that degradation of the insulating member of the compressor due to hydrolysis is sufficiently suppressed, so that degradation of the reliability of the compressor is suppressed.

### BRIEF DESCRIPTION OF THE DRAWINGS

FIG. 1 is a schematic configuration view of an air conditioning apparatus 1.
FIG. 2 is a block diagram of the air conditioning apparatus 1.
FIG. 3 is a schematic sectional view of a compressor 11.
FIG. 4 is an enlarged view of a region including a floating member 30 of the compressor 11.
FIG. 5 is a top view of a stator 70a of a motor 70.

### DESCRIPTION OF EMBODIMENTS

An air conditioning apparatus 1 serving as an example of a refrigeration apparatus including a compressor according to an embodiment of the present disclosure will be described with reference to drawings.

### (1) Air conditioning apparatus 1

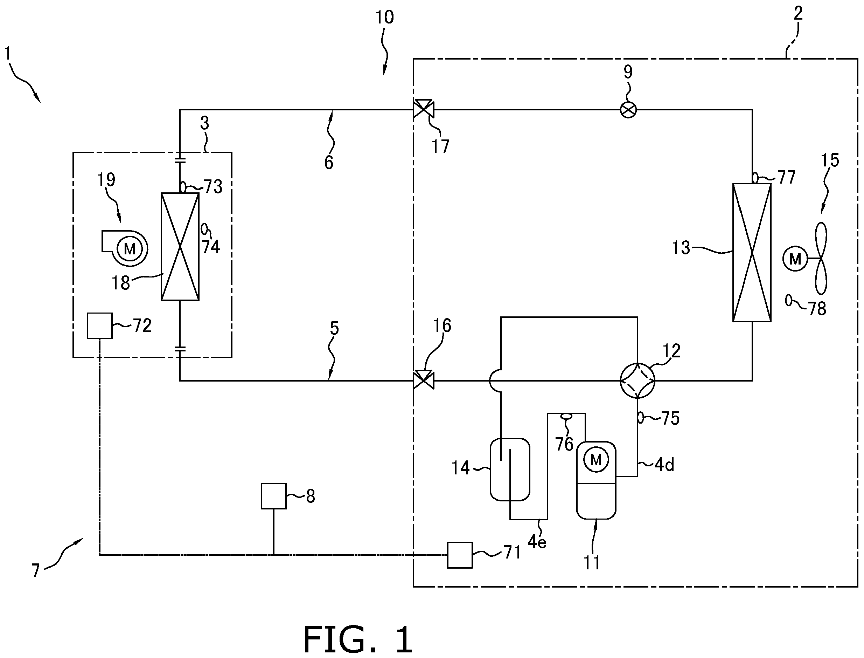

The air conditioning apparatus 1 performs a vapor-compression refrigeration cycle, to thereby condition the air of the target space. As illustrated in FIG. 1, the air conditioning apparatus 1 mainly includes an outdoor unit 2, an indoor unit 3, a gas-refrigerant connection pipe 5, a liquid-refrigerant connection pipe 6, a controller 7, and a remote control 8. The gas-refrigerant connection pipe 5 and the liquid-refrigerant connection pipe 6 connect together the outdoor unit 2 and the indoor unit 3.

The air conditioning apparatus 1 repeatedly performs a refrigeration cycle of compressing a refrigerant sealed within the refrigerant circuit 10 to condense the refrigerant (release of heat), decompressing the refrigerant to evaporate the refrigerant (absorption of heat), and subsequently compressing the refrigerant again.

The refrigerant circuit 10 is filled with the refrigerant for performing the vapor-compression refrigeration cycle. The refrigerant filling the refrigerant circuit 10 is a mono-component refrigerant composed only of a hydrocarbon-type refrigerant or a refrigerant mixture including a hydrocarbon-type refrigerant and another refrigerant. The refrigerant mixture is a refrigerant including a hydrocarbon-type refrigerant as a main component. The refrigerant mixture has a hydrocarbon-type refrigerant content of 50% by weight or more. The refrigerant mixture may include a plurality of hydrocarbon-type refrigerants. The hydrocarbon-type refrigerant is selected from the group consisting of methane (R50), ethane (R170), propane (R290), butane (R600), isobutane (R600a), pentane (R601), isopentane (R601a), ethylene (R1150), propylene (R1270), and cyclopropane (RC270). The hydrocarbon-type refrigerant is preferably propane (R290) or isobutane (R600a). Hydrocarbon-type refrigerants such as R290 have lower saturated water contents than HFC-type refrigerants such as R410A. In this embodiment, the refrigerant filling the refrigerant circuit 10 has a saturated water content of less than 0.3% by weight. The refrigerant may have a saturated water content of less than 0.15% by weight.

In the refrigerant circuit 10, the refrigerant and a refrigerating machine oil are sealed. The refrigerating machine oil is used to lubricate sliding portions within the refrigerant circuit 10. The refrigerating machine oil is selected from the group consisting of a polyalkylene glycol, an oil mixture of a polyalkylene glycol and a polyol ester, an oil mixture of a polyalkylene glycol and a polyvinyl ether, an oil mixture of a polyalkylene glycol and an alkylbenzene, and an oil mixture of a polyalkylene glycol and a mineral oil. Such refrigerating machine oils may be used alone or in combination of two or more thereof. The refrigerating machine oil has a saturated water content of 1.8% by weight or more, preferably 3.5% by weight or more, more preferably 10% by weight or more.

The refrigerating machine oil preferably includes, as an additive, at least one or more selected from the group consisting of an extreme pressure additive, an acid scavenger, and an antioxidant. Such additives are preferably added, for example, in an amount of 5.0% by weight or less, to the refrigerating machine oil.

Examples of the extreme pressure additive include extreme pressure additives including phosphates; organic sulfur compound-type extreme pressure additives such as monosulfides, polysulfides, sulfoxides, sulfones, thiosulfinates, sulfurized fats and oils, thiocarbonates, thiophenes, thiazoles, and methanesulfonates; thiophosphoric acid ester-type extreme pressure additives such as thiophosphoric acid triesters; ester-type extreme pressure additives such as higher fatty acids, hydroxyaryl fatty acids, polyhydric alcohol esters, and acrylates; organochlorine-type extreme pressure additives such as chlorinated hydrocarbons such as chlorinated paraffin and chlorinated carboxylic derivatives; organic fluorinated-type extreme pressure additives such as fluorinated aliphatic carboxylic acids, fluorinated ethylene resins, fluorinated alkylpolysiloxanes, and fluorinated graphite; alcohol-type extreme pressure additives such as higher alcohols; and metallic compound-type extreme pressure additives such as naphthenates (such as lead naphthenate), fatty acid salts (such as fatty acid lead salts), thiophosphates (such as lead dialkyl dithiophosphate), thiocarbamates, organic molybdenum compounds, organotin compounds, organogermanium compounds, and borates.

Examples of the acid scavenger include epoxy compounds such as phenyl glycidyl ether, alkyl glycidyl ethers, alkylene glycol glycidyl ethers, cyclohexene oxide, α-olefin oxides, and epoxidized soybean oil, and carbodiimide. Of these, from the viewpoint of miscibility with the refrigerating machine oil, preferred are phenyl glycidyl ethers, alkyl glycidyl ethers, alkylene glycol glycidyl ethers, cyclohexene oxide, and α-olefin oxides. The number of carbon atoms of such an acid scavenger is preferably 3 or more and 30 or less, more preferably 4 or more and 24 or less. The number of carbon atoms of such an α-olefin oxide is preferably 4 or more and 50 or less, more preferably 4 or more and 24 or less. Such acid scavengers may be used alone or in combination of two or more thereof.

Examples of the antioxidant include phenol-type antioxidants and amine-type antioxidants. Examples of the phenol-type antioxidants include 2,6-di-tert-butyl-4-methylphenol (DBPC), 2,6-di-tert-butyl-4-ethylphenol, 2,2'-methylenebis(4-methyl-6-tert-butylphenol), 2,4-dimethyl-6-tert-butylphenol, 2,6-di-tert-butylphenol, di-tert-butyl-p-cresol, and bisphenol A. Examples of the amine-type antioxidants include N,N'-diisopropyl-p-phenylenediamine, N,N'-di-sec-butyl-p-phenylenediamine, phenyl-α-naphthylamine, N,N'-diphenyl-p-phenylenediamine, and N,N-di(2-naphthyl)-p-phenylenediamine.

### (1-1) Outdoor unit 2

The outdoor unit 2 is connected, via the gas-refrigerant connection pipe 5 and the liquid-refrigerant connection pipe 6, to the indoor unit 3 to constitute a part of the refrigerant circuit 10. The outdoor unit 2 mainly has a compressor 11, a four-way switching valve 12, an outdoor heat exchanger 13, an expansion valve 9, a low-pressure receiver 14, an outdoor fan 15, a gas-side shutoff valve 16, and a liquid-side shutoff valve 17.

The compressor 11 is a device that compresses the low-pressure refrigerant in the refrigeration cycle to a high pressure. The compressor 11 in which compression elements of the rotary type, the scroll type, or the like are drivingly rotated by a compressor motor to thereby change the volume of the compression chamber, compresses the refrigerant in the compression chamber. The compressor motor can be controlled in terms of operation frequency by an inverter.

The four-way switching valve 12 switches the connection states of the refrigerant circuit 10, to thereby switch between the first connection state (solid lines in FIG. 1) and the second connection state (dotted lines in FIG. 1). The first connection state is connection of the discharge side of the compressor 11 to the outdoor heat exchanger 13 and connection of the suction side of the compressor 11 to the gas-side shutoff valve 16. The second connection state is connection of the discharge side of the compressor 11 to the gas-side shutoff valve 16 and connection of the suction side of the compressor 11 to the outdoor heat exchanger 13. The four-way switching valve 12 has four connection ports.

The outdoor heat exchanger 13 functions, during the cooling operation, as a condenser or a radiator for the high-pressure refrigerant in the refrigeration cycle, and functions, during the heating operation, as an evaporator or an absorber for the low-pressure refrigerant in the refrigeration cycle. The outdoor heat exchanger 13 has a plurality of heat transfer tubes (not shown) through which the refrigerant flows and a plurality of heat transfer fins (not shown) among which air flows. The plurality of heat transfer tubes are arranged side-by-side in the up-down directions and the heat transfer tubes each extend substantially in the horizontal direction. Examples of the material of the heat transfer tubes include copper, copper alloys (such as brass), and stainless steel (such as SUS304). The plurality of heat transfer fins extending in the up-down directions are arranged side-by-side, at the predetermined intervals, in the direction in which the heat transfer tubes extend. The plurality of heat transfer fins and the plurality of heat transfer tubes are combined together such that the plurality of heat transfer tubes extend through each of the heat transfer fins.

The outdoor fan 15 supplies the outdoor air to the outdoor heat exchanger 13 to generate an air flow that exchanges heat with the refrigerant in the outdoor heat exchanger 13 and subsequently discharges the heat to the outside of the outdoor unit 2. The outdoor fan 15 is drivingly rotated by an outdoor fan motor.

The expansion valve 9 is disposed between the liquid-side end of the outdoor heat exchanger 13 and the liquid-side shutoff valve 17. The expansion valve 9 is, for example, an electronic expansion valve in which the valve opening degree can be controlled by electronic control.

The low-pressure receiver 14 is disposed between the suction side of the compressor 11 and one of the four connection ports of the four-way switching valve 12. The low-pressure receiver 14 is a refrigerant container in which an excess refrigerant in the refrigerant circuit 10 can be stored as a liquid refrigerant.

The gas-side shutoff valve 16 is a manual valve disposed, within the outdoor unit 2, at the connection part to the gas-refrigerant connection pipe 5.

The liquid-side shutoff valve 17 is a manual valve disposed, within the outdoor unit 2, at the connection part to the liquid-refrigerant connection pipe 6.

The outdoor unit 2 has an outdoor-unit control unit 71 that controls operations of parts constituting the outdoor unit 2. The outdoor-unit control unit 71 has a microcomputer including a CPU, a memory, and the like. The outdoor-unit control unit 71 is connected, via a communication line, to an indoor-unit control unit 72 of each indoor unit 3 and sends or receives control signals and the like.

As illustrated in FIG. 1, the outdoor unit 2 includes a discharge temperature sensor 75, a suction temperature sensor 76, an outdoor heat-exchange temperature sensor 77, an outdoor air temperature sensor 78, and the like. These sensors are electrically connected to the outdoor-unit control unit 71 and send detection signals to the outdoor-unit control unit 71. The discharge temperature sensor 75 detects the temperature of the refrigerant flowing through a discharge pipe 4d connecting together the discharge side of the compressor 11 and one of the four connection ports of the four-way switching valve 12. The suction temperature sensor 76 detects the temperature of the refrigerant flowing through, in the suction path connecting together the suction side of the compressor 11 and one of the four connection ports of the four-way switching valve 12, a suction pipe 4e extending from the low-pressure receiver 14 to the suction side of the compressor 11. The outdoor heat-exchange temperature sensor 77 detects the temperature of the refrigerant flowing through a pipe near the liquid-side end of the outdoor heat exchanger 13. The outdoor air temperature sensor 78 detects the temperature of the outdoor air before it passes through the outdoor heat exchanger 13.

### (1-2) Indoor unit 3

The indoor unit 3 is disposed, in the indoor space serving as the target space, on the wall surface, the ceiling, or the like. The indoor unit 3 is connected, via the gas-refrigerant connection pipe 5 and the liquid-refrigerant connection pipe 6, to the outdoor unit 2 and constitutes a part of the refrigerant circuit 10. The indoor unit 3 mainly has an indoor heat exchanger 18 and an indoor fan 19.

The liquid-side end of the indoor heat exchanger 18 is connected to the liquid-refrigerant connection pipe 6. The gas-side end of the indoor heat exchanger 18 is connected to the gas-refrigerant connection pipe 5. The indoor heat exchanger 18 functions, during the cooling operation, as an evaporator or an absorber for the low-pressure refrigerant in the refrigeration cycle, and functions, during the heating operation, as a condenser or a radiator for the high-pressure refrigerant in the refrigeration cycle. The indoor heat exchanger 18 has, as with the outdoor heat exchanger 13, a plurality of heat transfer tubes (not shown) through which the refrigerant flows and a plurality of heat transfer fins (not shown) among which air flows.

The indoor fan 19 suctions the air in the indoor space serving as the target space, to generate an air flow that exchanges heat with the refrigerant in the indoor heat exchanger 18 and subsequently discharges the heat to the outside of the indoor unit 3. The indoor fan 19 is drivingly rotated by an indoor fan motor.

The indoor unit 3 has an indoor-unit control unit 72 that controls operations of parts constituting the indoor unit 3. The indoor-unit control unit 72 has a microcomputer including a CPU, a memory, and the like. The indoor-unit control unit 72 is connected, via a communication line, to the outdoor-unit control unit 71 and sends or receives control signals and the like.

As illustrated in FIG. 1, the indoor unit 3 includes an indoor heat-exchange temperature sensor 73, an indoor air temperature sensor 74, and the like. These sensors are electrically connected to the indoor-unit control unit 72 and send detection signals to the indoor-unit control unit 72. The indoor heat-exchange temperature sensor 73 detects the temperature of the refrigerant flowing through a pipe near the liquid-side end of the indoor heat exchanger 18. The indoor air temperature sensor 74 detects the temperature of the indoor air before it passes through the indoor heat exchanger 18.

### (1-3) Controller 7

In the air conditioning apparatus 1, the outdoor-unit control unit 71 and the indoor-unit control unit 72 are connected together via a communication line, to thereby constitute a controller 7 that controls operations of the air conditioning apparatus 1. The controller 7 mainly has a CPU and memories such as a ROM and a RAM. The controller 7 executes various processing and control as a result of collective functioning of parts included in the outdoor-unit control unit 71 and the indoor-unit control unit 72.

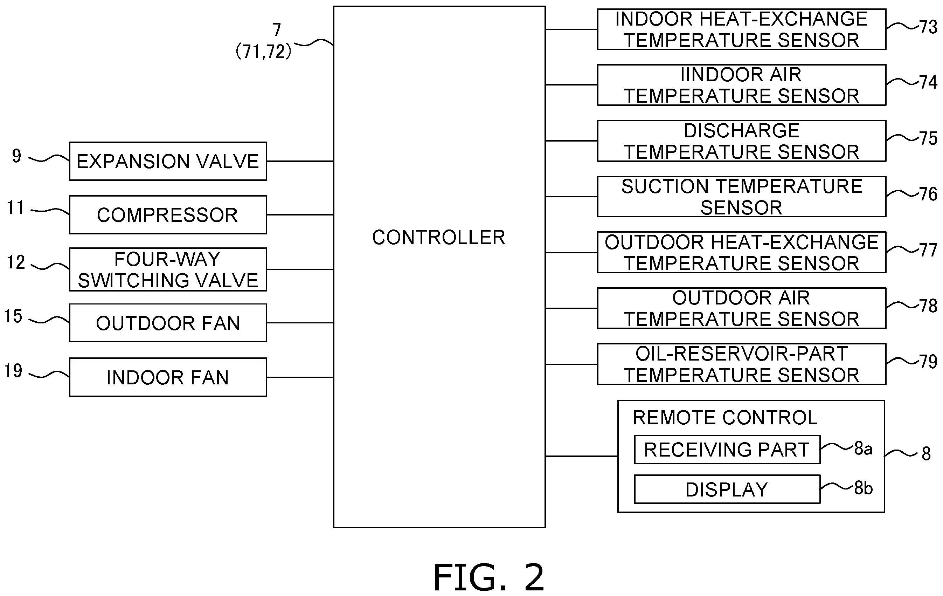

The controller 7 controls, via the outdoor-unit control unit 71 and the indoor-unit control unit 72, as illustrated in FIG. 2, elements of the refrigerant circuit 10. The controller 7 controls elements of the refrigerant circuit 10 such that, for example, the temperature of the fluids (the refrigerant and the refrigerating machine oil) flowing through the refrigerant circuit 10 of the air conditioning apparatus 1 is the predetermined temperature or less. Examples of such control include control of the driving frequency of the compressor 11 to less than the predetermined valve, control of the temperature of the refrigerant discharged from the compressor 11 to less than the predetermined temperature, and control of the pressure of the refrigerant discharged from the compressor 11 to less than the predetermined pressure.

### (1-4) Remote control 8

The remote control 8 is disposed in the indoor space serving as the target space or in the specified space of a building including the target space and is used by a user or the like in order to command the operation control of the air conditioning apparatus 1 and to monitor the operation state.

The remote control 8 includes a receiving part 8a such as operation buttons and a touch panel and a display 8b that can display various information items. The receiving part 8a is operated by a user or the like to thereby receive various information items. The remote control 8 is connected, via communication lines, to the outdoor-unit control unit 71 and the indoor-unit control unit 72 and supplies information items received at the receiving part 8a from a user or the like, to the controller 7. The remote control 8 outputs the information items received from the controller 7, on the display 8b.

The information items that the receiving part 8a receives from the user or the like are not limited and examples include information items about the command of executing the cooling operation mode, the command of executing the heating operation mode, the command of stopping the operation, and specification of setting the temperature. The information items displayed on the display 8b are not limited and examples include the current operating mode (the cooling or the heating operation mode), the set temperature, and information items indicating occurrence of various faults.

### (2) Compressor 11

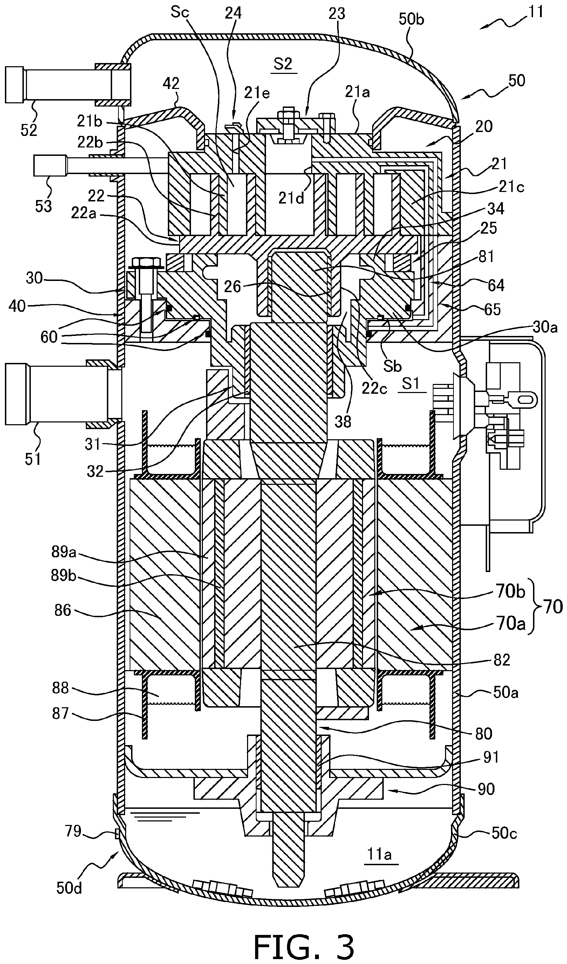

The compressor 11 is, what is called, a low-pressure dome-type scroll compressor. As illustrated in FIG. 3, the compressor 11 mainly has a casing 50, a compression mechanism 20, a floating member 30, a housing 40, a sealing member 60, a motor 70, a crankshaft 80, and a lower bearing housing 90.

### (2-1) Casing 50

The casing 50 has a cylindrical member 50a having a substantially cylindrical shape, an upper lid 50b attached to the upper end of the cylindrical member 50a, and a lower lid 50c attached to the lower end of the cylindrical member 50a. The cylindrical member 50a, the upper lid 50b, and the lower lid 50c are fixed together by welding so as to keep a hermetic seal. The casing 50 houses constituent parts of the compressor 11 including the compression mechanism 20, the floating member 30, the housing 40, the sealing member 60, the motor 70, the crankshaft 80, and the lower bearing housing 90.

In an upper portion of the casing 50, the compression mechanism 20 is disposed. Under the compression mechanism 20, the floating member 30 and the housing 40 are disposed. Under the housing 40, the motor 70 is disposed. Under the motor 70, the lower bearing housing 90 is disposed.

In the bottom portion of the casing 50, an oil reservoir space 11a is formed. In the oil reservoir space 11a, a refrigerating machine oil that lubricates the compression mechanism 20 and the like is stored. The casing 50 has an oil reservoir part 50d forming the oil reservoir space 11a. The oil reservoir part 50d is a part of the casing 50 and corresponds to a part below the lower bearing housing 90. For example, as illustrated in FIG. 3, the oil reservoir part 50d is constituted by the lower lid 50c and the lower end portion of the cylindrical member 50a. The outer surface of the oil reservoir part 50d is equipped with an oil-reservoir-part temperature sensor 79. The oil-reservoir-part temperature sensor 79 measures the temperature of the oil reservoir part 50d.

The internal space of the casing 50 is divided by a diaphragm 42 into a first space S 1 and a second space S2. The first space S 1 is a space below the diaphragm 42. The second space S2 is a space above the diaphragm 42. The diaphragm 42 is fixed, by welding, to the compression mechanism 20 and the casing 50 so as to keep a hermetic seal between the first space S1 and the second space S2.

The diaphragm 42 is a plate-shaped member formed so as to have a ring shape in plan view. The entire circumference of the internal circumference side of the diaphragm 42 is fixed to an upper portion of a fixed scroll 21 of the compression mechanism 20. The entire circumference of the external circumference side of the diaphragm 42 is fixed to the internal surface of the casing 50.

The first space S 1 is a space in which the motor 70 is disposed. The first space S 1 is a space into which, from the refrigerant circuit 10 having the compressor 11, the refrigerant to be compressed by the compressor 11 flows. The first space S1 is a space into which the low-pressure refrigerant in the refrigeration cycle flows.

The second space S2 is a space into which the refrigerant discharged from the compression mechanism 20 (the refrigerant having been compressed by the compression mechanism 20) flows. The second space S2 is a space into which the high-pressure refrigerant in the refrigeration cycle flows.

The casing 50 is equipped with a suction pipe 51, a discharge pipe 52, and an injection pipe 53 such that the inside and the outside of the casing 50 are in communication with each other.

The suction pipe 51 is attached to a portion near the center in the up-down directions (the vertical direction) of the casing 50. Specifically, as illustrated in FIG. 3, the suction pipe 51 is attached, at a level between the housing 40 and the motor 70, to the cylindrical member 50a so as to extend in the horizontal direction. The suction pipe 51 provides communication between the outside of the casing 50 and the first space S1 in the inside of the casing 50. The refrigerant to be compressed (the low-pressure refrigerant in the refrigeration cycle) passes through the suction pipe 51 and flows into the first space S1.

The discharge pipe 52 is attached to an upper portion of the casing 50 at a level above the diaphragm 42. Specifically, as illustrated in FIG. 3, the suction pipe 51 is attached to the upper lid 50b so as to extend in the horizontal direction. The discharge pipe 52 provides communication between the outside of the casing 50 and the second space S2 in the inside of the casing 50. The refrigerant having been compressed by the compression mechanism 20 and having flowed into the second space S2 (the high-pressure refrigerant in the refrigeration cycle) passes through the discharge pipe 52 and flows to the outside of the compressor 11.

The injection pipe 53 is attached to an upper portion of the casing 50 at a level below the diaphragm 42. Specifically, as illustrated in FIG. 3, the injection pipe 53 is attached to the cylindrical member 50a, at the level of the compression mechanism 20, so as to extend in the horizontal direction. The end of the injection pipe 53 in the inside of the casing 50 is, as illustrated in FIG. 3, connected to the fixed scroll 21 of the compression mechanism 20. The injection pipe 53 is in communication with, via a path (not shown) formed in the fixed scroll 21, a compression chamber Sc being compressed and disposed in the inside of the compression mechanism 20. An intermediate-pressure refrigerant (the refrigerant having a pressure between the low pressure and the high pressure in the refrigeration cycle) is supplied from the refrigerant circuit 10 having the compressor 11, via the injection pipe 53, to the compression chamber Sc being compressed.

### (2-2) Compression mechanism 20

The compression mechanism 20 mainly has the fixed scroll 21 and a movable scroll 22. The fixed scroll 21 and the movable scroll 22 are combined together to form the compression chamber Sc. The compression mechanism 20 compresses the refrigerant in the compression chamber Sc and discharges the compressed refrigerant.

### (2-2-1) Fixed scroll 21

The fixed scroll 21 is, as illustrated in FIG. 3, disposed on the housing 40. The fixed scroll 21 and the housing 40 are fixed to each other using fixing means such as bolts.

The fixed scroll 21 has a disc-shaped fixed-side end plate 21a, a spiral fixed-side wrap 21b, and a circumferential part 21c. The fixed-side wrap 21b and the circumferential part 21c extend from the front surface (lower surface) of the fixed-side end plate 21a to the movable scroll 22 side (downward). When the fixed scroll 21 is viewed from below, the fixed-side wrap 21b is formed so as to have a spiral shape (involute shape) from the near-center portion of the fixed-side end plate 21a to the outer circumferential side. The circumferential part 21c has a cylindrical shape. The circumferential part 21c is positioned on the outer circumferential side of the fixed-side end plate 21a so as to surround the fixed-side wrap 21b.

During operation of the compressor 11, the movable scroll 22 orbits with respect to the fixed scroll 21, so that the refrigerant (the low-pressure refrigerant in the refrigeration cycle) having flowed from the first space S1 into the circumferential-side compression chamber Sc is compressed as it moves to the innermost-side (central-side) compression chamber Sc. In the near-center portion of the fixed-side end plate 21a, a discharge port 21d that discharges the refrigerant having been compressed in the compression chamber Sc is formed so as to extend through the fixed-side end plate 21a in the thickness direction (up-down directions). The discharge port 21d is in communication with the innermost-side compression chamber Sc. Over the fixed-side end plate 21a, a discharge valve 23 that opens or closes the discharge port 21d is attached. When the pressure of the innermost-side compression chamber Sc in communication with the discharge port 21d is higher, by a predetermined value or more, than the pressure of the space (second space S2) above the discharge valve 23, the discharge valve 23 opens, so that the refrigerant flows through the discharge port 21d to the second space S2.

On the outer circumferential side of the discharge port 21d in the fixed-side end plate 21a, a relief vent 21e is formed so as to extend through the fixed-side end plate 21a in the thickness direction. The relief vent 21e is in communication with the compression chamber Sc formed on the outer circumferential side with respect to the innermost-side compression chamber Sc in communication with the discharge port 21d. The relief vent 21e is in communication with the compression chamber Sc being compressed in the compression mechanism 20. A plurality of relief vents 21e may be formed in the fixed-side end plate 21a. Over the fixed-side end plate 21a, a relief valve 24 that opens or closes the relief vent 21e is attached. When the pressure of the compression chamber Sc in communication with the relief vent 21e is higher, by a predetermined value or more, than the space (second space S2) above the relief valve 24, the relief valve 24 serving as a safety valve opens, so that the refrigerant flows through the relief vent 21e to the second space S2.

### (2-2-2) Movable scroll 22

The movable scroll 22 has a disc-shaped movable-side end plate 22a, a spiral movable-side wrap 22b, and a cylindrical boss part 22c. The movable-side wrap 22b extends from the front surface (upper surface) of the movable-side end plate 22a to the fixed scroll 21 side (upward). The boss part 22c extends from the back surface (lower surface) of the movable-side end plate 22a to the motor 70 side (downward). When the movable scroll 22 is viewed from above, the movable-side wrap 22b is formed so as to have a spiral shape (involute shape) from the near-center portion of the movable-side end plate 22a to the outer circumferential side.

The fixed-side wrap 21b of the fixed scroll 21 and the movable-side wrap 22b of the movable scroll 22 are combined with each other to form the compression chamber Sc. The fixed scroll 21 and the movable scroll 22 are combined such that the front surface (lower surface) of the fixed-side end plate 21a faces the front surface (upper surface) of the movable-side end plate 22a. This forms the compression chamber Sc surrounded by the fixed-side end plate 21a, the fixed-side wrap 21b, the movable-side wrap 22b, and the movable-side end plate 22a.

The compression mechanism 20 has a symmetrical wrap structure or an asymmetrical wrap structure. In the case of the compression mechanism 20 having the symmetrical wrap structure, the first compression chamber surrounded by the outer circumferential surface of the movable-side wrap 22b and the inner circumferential surface of the fixed-side wrap 21b and the second compression chamber surrounded by the inner circumferential surface of the movable-side wrap 22b and the outer circumferential surface of the fixed-side wrap 21b are formed so as to have point symmetry when viewed in the vertical direction. In the case of the compression mechanism 20 having the asymmetrical wrap structure, the first compression chamber and the second compression chamber are formed so as not to have point symmetry when viewed in the vertical direction.

The movable-side end plate 22a is disposed above the floating member 30. During operation of the compressor 11, the floating member 30 is pressed, by the pressure of a back-pressure space Sb formed below the floating member 30, toward the movable scroll 22. This brings a pressing part 34, which is an upper part of the floating member 30, into contact with the back surface (lower surface) of the movable-side end plate 22a, so that the floating member 30 presses the movable scroll 22 toward the fixed scroll 21. The force that the floating member 30 presses the movable scroll 22 toward the fixed scroll 21 brings firmly the movable scroll 22 into contact with the fixed scroll 21. This suppresses leakage of the refrigerant from the gap between the tooth tip (tip surface) of the fixed-side wrap 21b and the bottom surface (main surface in contact with the tooth tip) of the movable-side end plate 22a, and the gap between the tooth tip of the movable-side wrap 22b and the bottom surface of the fixed-side end plate 21a.

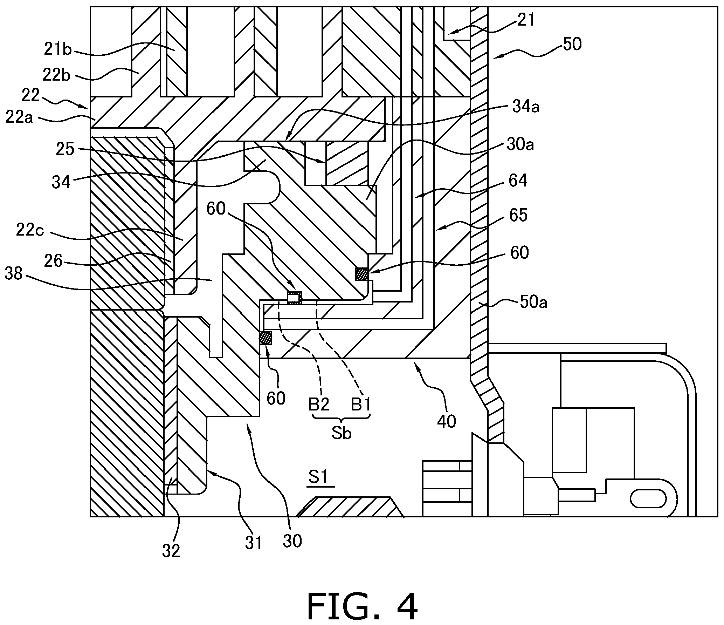

The back-pressure space Sb is a space formed between the floating member 30 and the housing 40. The back-pressure space Sb is, as illustrated in FIG. 4, mainly formed on the back surface side (under side) of the floating member 30. To the back-pressure space Sb, the refrigerant in the compression chamber Sc of the compression mechanism 20 is guided. Sealing is provided between the back-pressure space Sb and the first space S 1 around the back-pressure space Sb. During operation of the compressor 11, the pressure of the back-pressure space Sb is higher than the pressure in the first space S1.

Between the movable scroll 22 and the floating member 30, an Oldham coupling 25 is disposed. The Oldham coupling 25 slidably engages with both of the movable scroll 22 and the floating member 30. The Oldham coupling 25 suppresses rotation of the movable scroll 22 and causes the movable scroll 22 to orbit with respect to the fixed scroll 21.

The boss part 22c is disposed in an eccentric part space 38 surrounded by the internal surface of the floating member 30. Within the boss part 22c, a first bearing metal 26 is disposed. The first bearing metal 26 is, for example, press fit into the boss part 22c and fixed. Into the first bearing metal 26, an eccentric part 81 of the crankshaft 80 is inserted. The eccentric part 81 is inserted into the first bearing metal 26, so that the movable scroll 22 and the crankshaft 80 are coupled to each other.

### (2-3) Floating member 30

The floating member 30 is disposed on the back surface side of the movable scroll 22 (the opposite side from the side on which the fixed scroll 21 is disposed). The floating member 30 is pressed by the pressure of the back-pressure space Sb toward the movable scroll 22, to thereby press the movable scroll 22 toward the fixed scroll 21. A portion of the floating member 30 also functions as a bearing that supports the crankshaft 80.

The floating member 30 mainly has a cylindrical main part 30a, a pressing part 34, and an upper bearing housing 31.

The main part 30a forms the eccentric part space 38 surrounded by the internal surface of the main part 30a. In the eccentric part space 38, the boss part 22c of the movable scroll 22 is disposed.

The pressing part 34 is a cylindrical member that extends from the upper end of the main part 30a toward the movable scroll 22. As illustrated in FIG. 4, a thrust surface 34a at the upper end of the pressing part 34 faces the back surface of the movable-side end plate 22a of the movable scroll 22. The thrust surface 34a is formed so as to have a ring shape in plan view. The floating member 30 is pressed by the pressure of the back-pressure space Sb toward the movable scroll 22, to bring the thrust surface 34a into contact with the back surface of the movable-side end plate 22a, so that the movable scroll 22 is pressed toward the fixed scroll 21.

The upper bearing housing 31 is a cylindrical member disposed under the main part 30a (under the eccentric part space 38). Within the upper bearing housing 31, a second bearing metal 32 is disposed. The second bearing metal 32 is, for example, press fit into the upper bearing housing 31 and fixed. The second bearing metal 32 rotatably supports a main shaft 82 of the crankshaft 80.

### (2-4) Housing 40

The housing 40 is a member disposed under the fixed scroll 21 and the floating member 30 and having a substantially cylindrical shape. The housing 40 supports the floating member 30. Between the housing 40 and the floating member 30, the back-pressure space Sb is formed. The housing 40 is, for example, press fit and attached to the internal surface of the casing 50.

### (2-5) Sealing member 60

The sealing member 60 is a member that forms the back-pressure space Sb between the floating member 30 and the housing 40. The sealing member 60 is, for example, a gasket such as an O ring. As illustrated in FIG. 4, the sealing member 60 divides the back-pressure space Sb into a first chamber B 1 and a second chamber B2. The first chamber B 1 and the second chamber B2 are spaces formed so as to have a substantially circular ring shape in plan view. The second chamber B2 is disposed inside with respect to the first chamber B 1. In plan view, the first chamber B1 has an area larger than the area of the second chamber B2.

The first chamber B 1 is in communication with, via a first path 64, the compression chamber Sc being compressed. The first path 64 is a path that guides the refrigerant being compressed in the compression mechanism 20 (intermediate-pressure refrigerant) to the first chamber B 1. The first path 64 is formed in the fixed scroll 21 and the housing 40.

The second chamber B2 is in communication with, via a second path 65, the discharge port 21d of the fixed scroll 21. The second path 65 is a path that guides the refrigerant discharged from the compression mechanism 20 (high-pressure refrigerant) to the second chamber B2. The second path 65 is formed in the fixed scroll 21 and the housing 40.

During operation of the compressor 11, the second chamber B2 has a pressure higher than the pressure of the first chamber B1. However, in plan view, the first chamber B1 has an area larger than the area of the second chamber B2 and hence the pressing force of the movable scroll 22 due to the pressure of the back-pressure space Sb toward the fixed scroll 21 is less likely to be excessive. The second chamber B2 is disposed inside with respect to the first chamber B1 and hence balance tends to be ensured between the force pressing the movable scroll 22 downward due to the pressure of the compression chamber Sc and the force of pressing the movable scroll 22 upward due to the floating member 30.

### (2-6) Motor 70

The motor 70 is housed within the casing 50 and is a concentrated winding-type motor disposed under the compression mechanism 20. The motor 70 is mainly constituted by a stator 70a fixed on the inner wall surface of the casing 50 and a rotor 70b rotatably housed in the inside of the stator 70a. An air gap is provided between the stator 70a and the rotor 70b.

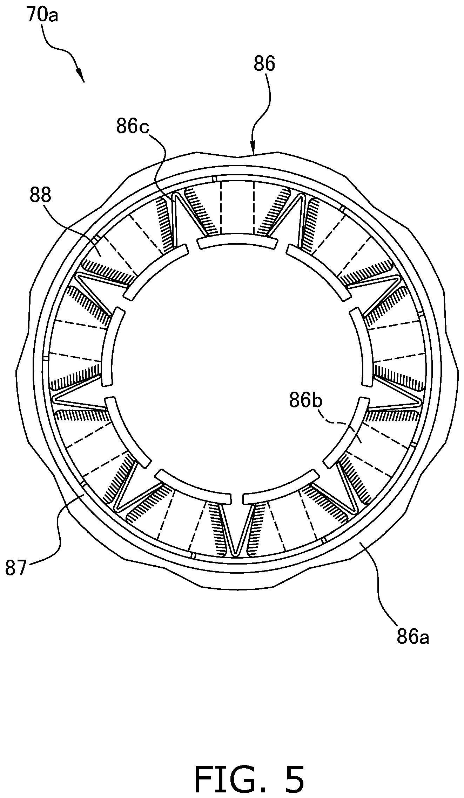

The stator 70a has a stator core 86 and a pair of insulators 87 attached to both end surfaces (in the vertical direction) of the stator core 86. As illustrated in FIG. 5, the stator core 86 has a cylindrical part 86a and a plurality of teeth 86b protruding from the inner circumferential surface of the cylindrical part 86a to the inside in the radial direction. The teeth 86b of the stator core 86 together with the pair of insulators 87 are wound with winding. This forms a coil 88 in each of the teeth 86b of the stator core 86.

In the outer side surface of the stator 70a, a plurality of core cut portions (not shown) are formed by cutting away at predetermined intervals in the circumferential direction so as to extend from the upper end surface to the lower end surface of the stator 70a. The core cut portions form motor cooling paths extending in the vertical direction between the cylindrical member 50a of the casing 50 and the stator 70a.

The rotor 70b has a rotor core 89a constituted by a plurality of metal plates stacked in the vertical direction and a plurality of magnets 89b embedded in the rotor core 89a. The magnets 89b are disposed at regular intervals in the circumferential direction of the rotor core 89a. The rotor 70b is coupled to the crankshaft 80, which extends in the vertical direction through the rotational center of the rotor 70b. The rotor 70b is coupled, via the crankshaft 80, to the movable scroll 22 of the compression mechanism 20. In the motor 70, the rotor 70b is rotated to thereby drive the movable scroll 22, so that the movable scroll 22 is orbited with respect to the fixed scroll 21.

The motor 70 is equipped with an insulating member. In this embodiment, the insulating member is insulating films 86c attached to the stator 70a in order to suppress occurrence of an interphase short circuit of the motor 70. As illustrated in FIG. 5, such an insulating film 86c is inserted into the space between teeth 86b adjacent to each other in the circumferential direction in order to prevent contact between the windings of coils 88 adjacent to each other in the circumferential direction of the rotor 70b. The insulating film 86c may be supported by, for example, the insulator 87.

The insulating members such as the insulating films 86c are formed from, for example, a resin composed of a polymer having an ester bond. In this case, the polymer serving as the material of the resin is, for example, selected from the group consisting of polyethylene terephthalate, polybutylene terephthalate, and polyethylene naphthalate.

### (2-7) Crankshaft 80

The crankshaft 80 couples together the rotor 70b of the motor 70 and the movable scroll 22 of the compression mechanism 20. The crankshaft 80 extends in the up-down directions. The crankshaft 80 transmits the driving force of the motor 70 to the movable scroll 22.

The crankshaft 80 mainly has the eccentric part 81 and the main shaft 82.

The eccentric part 81 is disposed over the main shaft 82. The center axis of the eccentric part 81 is eccentric with respect to the center axis of the main shaft 82. The eccentric part 81 is coupled to the first bearing metal 26 disposed within the boss part 22c of the movable scroll 22.

The main shaft 82 is rotatably supported by the second bearing metal 32 disposed in the upper bearing housing 31 of the floating member 30 and a third bearing metal 91 disposed in the lower bearing housing 90. The main shaft 82 is coupled, between the upper bearing housing 31 and the lower bearing housing 90, to the rotor 70b of the motor 70. The main shaft 82 extends in the up-down directions.

Within the crankshaft 80, an oil path (not shown) is formed. The oil path has a main path and branched paths. The main path extends from the lower end to the upper end of the crankshaft 80 in the axial direction of the crankshaft 80. The branched paths extend from the main path in the radial direction of the crankshaft 80. The refrigerating machine oil in the oil reservoir space 11a is drawn up by a pump (not shown) disposed at the lower end of the crankshaft 80, passed through the oil path, and supplied to sliding portions between the crankshaft 80 and each of the first bearing metal 26, the second bearing metal 32, and the third bearing metal 91, sliding portions of the compression mechanism 20, and the like.

### (2-8) Lower bearing housing 90

The lower bearing housing 90 is fixed on the inner surface of the casing 50. The lower bearing housing 90 is disposed under the motor 70. Within the lower bearing housing 90, the third bearing metal 91 is disposed. The third bearing metal 91 is, for example, press fit into the lower bearing housing 90 and fixed. The main shaft 82 of the crankshaft 80 extends through the third bearing metal 91. The third bearing metal 91 rotatably supports the lower portion side of the main shaft 82 of the crankshaft 80.

### (3) Operations of compressor 11

Operations of the compressor 11 in the normal state will be described. The normal state is a state in which the pressure of the refrigerant discharged through the discharge port 21d of the compression mechanism 20 is higher than the pressure of the compression chamber Sc being compressed.

When the motor 70 is driven, the rotor 70b is rotated and the crankshaft 80 coupled to the rotor 70b is also rotated. When the crankshaft 80 is rotated, the Oldham coupling 25 causes the movable scroll 22 not to rotate, but to orbit with respect to the fixed scroll 21. The low-pressure refrigerant having flowed from the suction pipe 51 into the first space S1 passes through the refrigerant path (not shown) formed in the housing 40 and is suctioned to the circumferential-side compression chamber Sc of the compression mechanism 20. When the movable scroll 22 orbits, the first space S 1 and the compression chamber Sc are no longer in communication with each other, so that the volume of the compression chamber Sc decreases and the pressure of the compression chamber Sc increases. In the compression chamber Sc being compressed, the intermediate-pressure refrigerant is injected through the injection pipe 53. The pressure of the refrigerant increases as the refrigerant moves from the circumferential-side (outer) compression chamber Sc to the center-side (inner) compression chamber Sc and eventually reaches the high pressure in the refrigeration cycle. The refrigerant having been compressed by the compression mechanism 20 is discharged through the discharge port 21d of the fixed-side end plate 21a to the second space S2. The high-pressure refrigerant of the second space S2 is discharged through the discharge pipe 52.

### (4) Features

Water present within the refrigerant circuit 10 of the air conditioning apparatus 1 is absorbed by the refrigerant filling the refrigerant circuit 10, the refrigerating machine oil sealed in the refrigerant circuit 10, and the insulating members (such as insulating films 86c) within the casing 50 of the compressor 11. The refrigerant, the refrigerating machine oil, and the insulating members can each absorb water in the amount of not more than the weight corresponding to the saturated water content. The saturated water content of the refrigerant is the ratio of the maximum weight of water that can be absorbed to the refrigerant relative to the weight of the refrigerant. The saturated water content of the refrigerating machine oil is the ratio of the maximum weight of water that can be absorbed to the refrigerating machine oil relative to the weight of the refrigerating machine oil. The saturated water content of the insulating member is the ratio of the maximum weight of water that can be absorbed to the insulating member relative to the weight of the insulating member. The saturated water contents vary depending on, for example, the types or compositions of the refrigerant, the refrigerating machine oil, and the insulating member. The unit of the saturated water content is % by weight (wt%). The lower the saturated water content, the less the amount of water absorbed.

The amounts of water absorbed, in the refrigerant circuit 10, to the refrigerant, the refrigerating machine oil, and the insulating member are distributed in accordance with the ratio of the saturated water contents of the refrigerant, the refrigerating machine oil, and the insulating member. Thus, the lower the saturated water content of the refrigerant, the more the water in the refrigerant circuit 10 absorbed to the insulating member. When water is absorbed to the insulating member, water may degrade the insulating member depending on the material of the insulating member. For example, when the insulating member is formed of resin, water may hydrolyze the resin to degrade the insulating member, which may result in degradation of the insulating performance of the insulating member. When the insulating member is used to suppress occurrence of an interphase short circuit of the motor 70, degradation of the insulating member may result in occurrence of a short circuit within the compressor 11. Thus, the larger the amount of water absorbed to the insulating member, the higher the probability of degradation of the insulating member attached to the motor 70 and the resulting occurrence of a short circuit.

In this embodiment, the refrigerant filling the refrigerant circuit 10 of the air conditioning apparatus 1 and including a hydrocarbon as a main component has a lower saturated water content than HFC-type refrigerants such as R410A. Specifically, the refrigerant filling the refrigerant circuit 10 has a saturated water content of less than 0.3% by weight. However, the refrigerating machine oil sealed in the refrigerant circuit 10 has a higher saturated water content than publicly known refrigerating machine oils (such as polyvinyl ethers, polyol esters, and mineral oils). Specifically, the refrigerating machine oil sealed in the refrigerant circuit 10 has a saturated water content of 1.8% by weight or more. Thus, the refrigerant circuit 10 uses the refrigerant having a low saturated water content and the refrigerating machine oil having a high saturated water content. As a result, in this embodiment, the water in the refrigerant circuit 10 tends to be absorbed to the refrigerating machine oil, which results in a decrease in the amount of water absorbed to the insulating member in the casing 50. Therefore, degradation of the insulating member due to hydrolysis is suppressed, which results in suppression of occurrence of a short circuit within the motor 70.

### (5) EXAMPLES

Test results of the refrigeration apparatus in this embodiment will be described. In the test of the refrigeration apparatus, the air conditioning apparatus 1 using a refrigerant and a refrigerating machine oil was operated for a long time and changes in the strength of the insulating member in the casing 50 of the compressor 11 were measured. The conditions of operating the air conditioning apparatus 1 for a long time are as follows.
- Test time: 2000 hours
- Discharge temperature: 130°C
- Discharge pressure (when the refrigerant is CO₂): 12 MPa
- Discharge pressure (when the refrigerant is not CO₂): a discharge pressure corresponding to a condensation temperature of 65°C

The test time is the time for which the air conditioning apparatus 1 was continuously operated in the test of the refrigeration apparatus. The discharge temperature is the temperature of the compressed refrigerant gas discharged from the compressor 11. The discharge pressure is the pressure of the compressed refrigerant gas discharged from the compressor 11.

During operation of the air conditioning apparatus 1 for a long time, the tensile strength of the insulating member gradually decreases. In this test, degradation time, which is the time elapsed until the tensile strength of the insulating member decreased by 50% of the original tensile strength of the insulating member, was measured. The original tensile strength of the insulating member is the tensile strength of the unused insulating member to be attached to the motor 70 of the compressor 11. The following Table describes the test results.

**Table 1**

| | Refrigera nt | Saturated water co ntent of refrigerant [%] | Refrigera ting mac hine oil | Saturated water content of refrigerating machine oil [ %] | Degradat ion time [hours] |
|---|---|---|---|---|---|
| Example 1 | R290 | 0.13 | PAG | 1.8 | 21580 |
| Example 2 | R290 | 0.13 | PAG | 3.5 | 28830 |
| Example 3 | R290 | 0.13 | PAG | >10 | 56580 |
| Comparat ive Exa mple 1 | R410A | 0.55 | PVE | 0.9 | 21260 |
| Comparat ive Exa mple 2 | R32 | 0.67 | PVE | 0.95 | 22550 |
| Comparat ive Exa mple 3 | CO₂ | 0.3 | PAG | 1.6 | 22180 |
| Comparat ive Exa mple 4 | R290 | 0.13 | PVE | 0.9 | 17740 |
| Comparat ive Exa mple 5 | R290 | 0.13 | POE | 0.2 | 14750 |
| Comparat ive Exa mple 6 | R290 | 0.13 | Mineral oil | 0.01 | 13940 |

The refrigerants used in the test are R290 (propane), R410A (refrigerant mixture of R32 and R125 in 1:1), R32 (difluoromethane), and CO₂ (carbon dioxide).

The refrigerating machine oils used in the test are PAG (polyalkylene glycol), PVE (polyvinyl ether), POE (polyol ester), and mineral oil. PAG used in Example 1 is a polymer of PO (propylene oxide). PAG used in Example 2 is a copolymer of PO (propylene oxide) and EO (ethylene oxide). PAG used in Example 3 is a polymer of a diol-type monomer such as ethylene glycol and propylene glycol.

The insulating member is formed from a resin composed of a polymer having an ester bond. The insulating member is an insulating film 86c formed from polyethylene terephthalate. The evaluation criterion of the degradation of the insulating member is as follows: when the degradation time is more than 20000 hours, degradation of the insulating member is determined to be suppressed; when the degradation time is 20000 hours or less, degradation of the insulating member is not suppressed and the degradation is determined to be observed. The criterion, 20000 hours is a value set on the basis of the degradation time of Comparative Example 1, 21260 hours.

The refrigerants used are divided into R290, which has a low saturated water content, and R410A, R32, and CO₂, which have high saturated water contents. In the case of using the refrigerants having high saturated water contents (R410A, R32, and CO₂), a small amount of water was distributed to the insulating member and hence degradation of the insulating member was suppressed regardless of the types of the refrigerating machine oils (Comparative Examples 1 to 3). In the case of using the refrigerant having a low saturated water content (R290), use of the refrigerating machine oils having a saturated water content of 1.8% by weight or more resulted in suppression of degradation of the insulating members (Examples 1 to 3) while use of the refrigerating machine oils having a saturated water content of less than 1.8% by weight resulted in observation of degradation of the insulating members (Comparative Examples 4 to 6).

The above-described test results have demonstrated the following: even in the case of using R290, which is a refrigerant having a lower saturated water content than R410A, R32, and CO₂, use of a refrigerating machine oil having a saturated water content of 1.8% by weight or more results in a decrease in the amount of water distributed to the insulating member and suppression of degradation of the insulating member.

### (6) Modifications

### (6-1) Modification A

In the air conditioning apparatus 1 of the embodiment, the compressor 11 is a low-pressure dome-type scroll compressor. Alternatively, the compressor 11 may be a high-pressure dome-type compressor. In the high-pressure dome-type compressor, the low-pressure refrigerant flowing in the refrigerant circuit 10 does not flow into the internal space of the casing 50, but is directly suctioned to the circumferential-side compression chamber Sc of the compression mechanism 20. Subsequently, the high-pressure refrigerant discharged from the compression mechanism 20 flows into the internal space of the casing 50 and subsequently discharged from the compressor 11. Thus, during operation of the high-pressure dome-type compressor, the internal space of the casing 50 is in a high-pressure state.

Alternatively, the compressor 11 may be a compressor of a type other than scroll compressors, such as a rotary compressor.

### (6-2) Modification B

In the embodiment, the insulating member attached to the motor 70 is the insulating film 86c. Alternatively, the insulating member may be a member other than the insulating film 86c as long as it is a member formed from a resin composed of a polymer having an ester bond. For example, the insulating member may be the insulating film of the winding of the coil 88, a tying string, an insulating sleeve, an insulating tube, an insulating cap, the insulator 87, and a cluster block. The tying string is a member that is used to fix, to the stator 70a, for example, lead wires extending from the coils 88 of the phases. The insulating sleeve is a braided wire that is used to protect lead wires extending from the coils 88 of the phases. The insulating tube is a member used to bundle lead wires extending from the coils 88 of the phases. The insulating cap is a member used to protect the neutral point of the coils 88 in the concentrated winding-type motor 70. The cluster block is a member used to protect the power source terminal connected to the coil 88.

The material of the insulating film of the winding of the coils 88 is, for example, polyesterimide-amideimide. The material of the tying string, the insulating sleeve, the insulating tube, and the insulating cap is, for example, polyethylene terephthalate. The material of the insulator 87 is, for example, liquid crystal polymer (aromatic polyester-type resin)-polyphenylene sulfide. The material of the cluster block is, for example, polybutylene terephthalate.

### (6-3) Modification C

In the embodiment, the motor 70 is a concentrated winding-type motor. Alternatively, the motor 70 may be a distributed winding-type motor.

### (6-4) Modification D

In the embodiment, the refrigeration apparatus including the compressor 11 is the air conditioning apparatus 1. Alternatively, the refrigeration apparatus may be an apparatus that performs a refrigeration cycle other than the air conditioning apparatus 1.

### - Conclusion -

Embodiments of the present disclosure have been described so far; however, it would be understood that the forms and details can be changed in various ways without departing from the spirit and scope of the present disclosure described in Claims.

### REFERENCE SIGNS LIST

- 1: air conditioning apparatus (refrigeration apparatus)
- 11: compressor
- 20: compression mechanism
- 50: casing
- 70: motor
- 86c: insulating film (insulating member)

### CITATION LIST

### PATENT LITERATURE

PTL 1: International Publication No. 2009/072314

## Claims

1. A compressor (11) comprising:
a casing (50) in which a refrigerating machine oil is stored;
a compression mechanism (20) that is housed within the casing and compresses a refrigerant; and
an insulating member that is housed within the casing and is formed of a polymer having an ester bond,
wherein the refrigerant includes a hydrocarbon as a main component,
the refrigerant has a saturated water content of less than 0.3% by weight, and
the refrigerating machine oil has a saturated water content of 1.8% by weight or more.

2. The compressor according to claim 1,
wherein the refrigerating machine oil is selected from the group consisting of a polyalkylene glycol, an oil mixture of a polyalkylene glycol and a polyol ester, an oil mixture of a polyalkylene glycol and a polyvinyl ether, an oil mixture of a polyalkylene glycol and an alkylbenzene, and an oil mixture of a polyalkylene glycol and a mineral oil.

3. The compressor according to claim 1 or 2,
wherein the refrigerant is propane or isobutane.

4. The compressor according to any one of claims 1 to 3,
wherein the polymer is selected from the group consisting of polyethylene terephthalate, polybutylene terephthalate, and polyethylene naphthalate.

5. The compressor according to any one of claims 1 to 4, further comprising:
a motor (70) that is coupled to the compression mechanism and drives the compression mechanism,
wherein the insulating member is an insulating film (86c) attached to the motor to suppress occurrence of an interphase short circuit of the motor.

6. A refrigeration apparatus (1) comprising:
the compressor according to any one of claims 1 to 5.

7. A refrigerating machine oil used in a compressor including a compression mechanism that compresses a refrigerant including a hydrocarbon as a main component and an insulating member formed of a polymer having an ester bond,
wherein the refrigerating machine oil is selected from the group consisting of a polyalkylene glycol, an oil mixture of a polyalkylene glycol and a polyol ester, an oil mixture of a polyalkylene glycol and a polyvinyl ether, an oil mixture of a polyalkylene glycol and an alkylbenzene, and an oil mixture of a polyalkylene glycol and a mineral oil, and
the refrigerating machine oil has a saturated water content of 1.8% by weight or more.
